# FASCICULE DE BREVET EUROPEEN

(11) **EP 4 153 958 B1**
(45) Date de publication et mention de la délivrance du brevet: **14.08.2024**
(21) Numéro de dépôt: 21732443.3
(22) Date de dépôt: 09.05.2021
(51) Int. Cl.: G01L 5/12, G01L 3/14

(54) **DISPOSITIF HYDRAULIQUE DE MESURE DE COUPLE POUR GROUPE MOTEUR D'AÉRONEF**
HYDRAULISCHE DREHMOMENTMESSVORRICHTUNG FÜR EINE FLUGZEUGMOTOREINHEIT
HYDRAULIC TORQUE MEASUREMENT DEVICE FOR AIRCRAFT ENGINE UNIT

(30) Priorité: 19.05.2020 FR 2005064
(43) Date de publication de la demande: 29.03.2023
(73) Titulaire: Safran Helicopter Engines, 64510 Bordes (FR)
(72) Inventeur: HOUSSAYE, Laurent Louis Sylvain, 77550 Moissy-Cramayel (FR)
(74) Mandataire: Gevers & Orès
(86) Numéro de dépôt international: PCT/FR2021/050791
(87) Numéro de publication internationale: WO 2021/234239

(56) Documents cités:
- US-A- 3 587 304
- US-A- 5 337 612

## Description

### Domaine technique de l'invention

La présente invention concerne un couplemètre hydraulique, en particulier pour un moteur d'aéronef.

### Arrière-plan technique

L'arrière-plan technique comprend notamment les documents US 3587304 A1 et US 5337612 A1.

On connait, dans le domaine aéronautique, des couplemètres hydrauliques qui s'appuient sur un mécanisme de régulation automatique de pression hydraulique dans la mesure de couple. La pression hydraulique régulée par le mécanisme précité est une fonction simple du couple délivré par le moteur afférent. En effet, la poussée axiale sur un ou plusieurs pignons intermédiaires, par exemple à denture hélicoïdale, d'un réducteur est proportionnelle au couple transitant dans ce même réducteur. Un capteur mesure cette pression hydraulique régulée et, moyennant la prise en compte de quelques coefficients de conformation déterminés lors de l'essai de réception du moteur, un calculateur déduit de cette mesure de pression le couple effectivement délivré par le moteur.

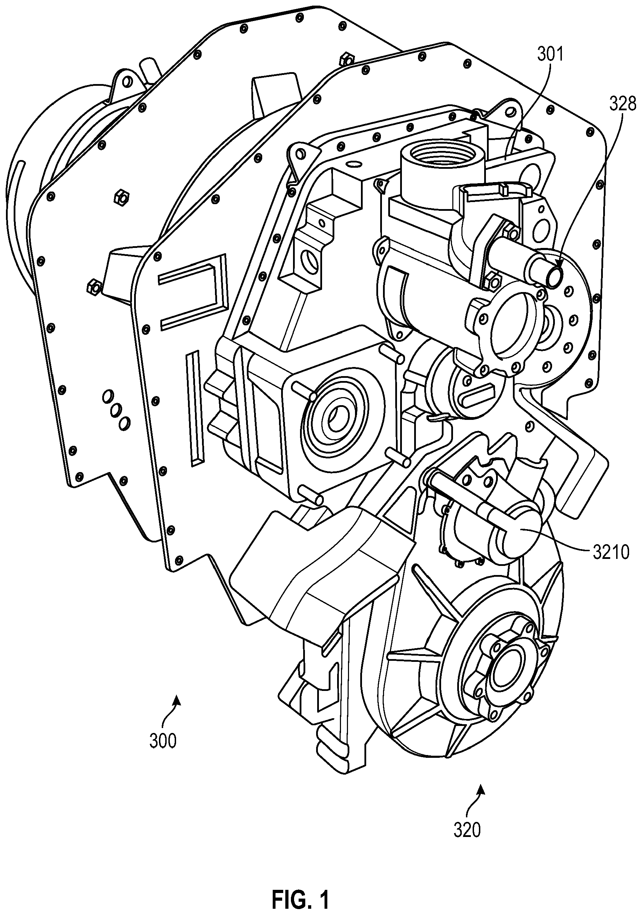

Un tel couplemètre hydraulique 320 connu, mis en oeuvre dans une boîte de transmission 300 d'un groupe moteur (non illustré) pour hélicoptère, est décrit en référence en figures 1, 2A, 2B et 3.

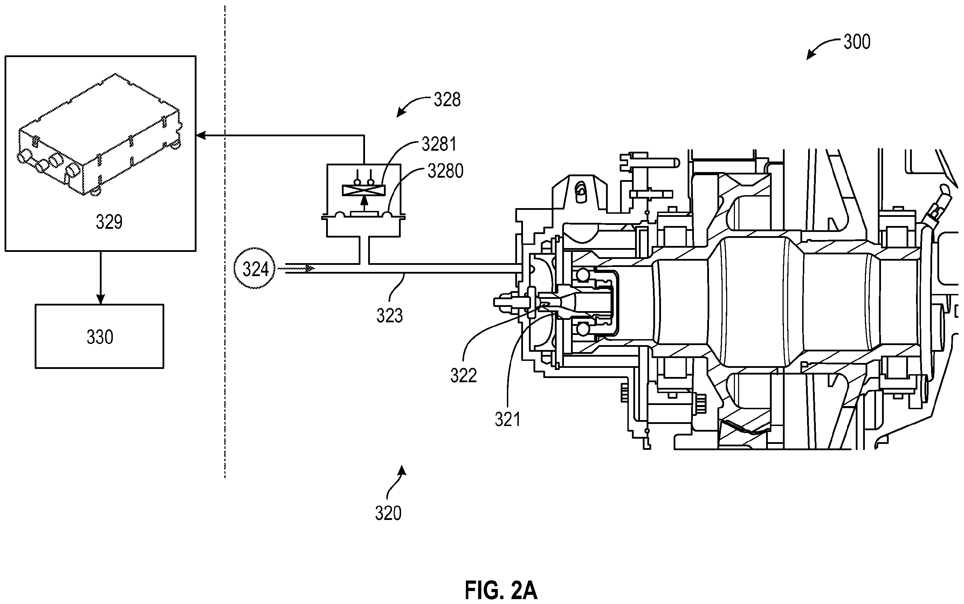

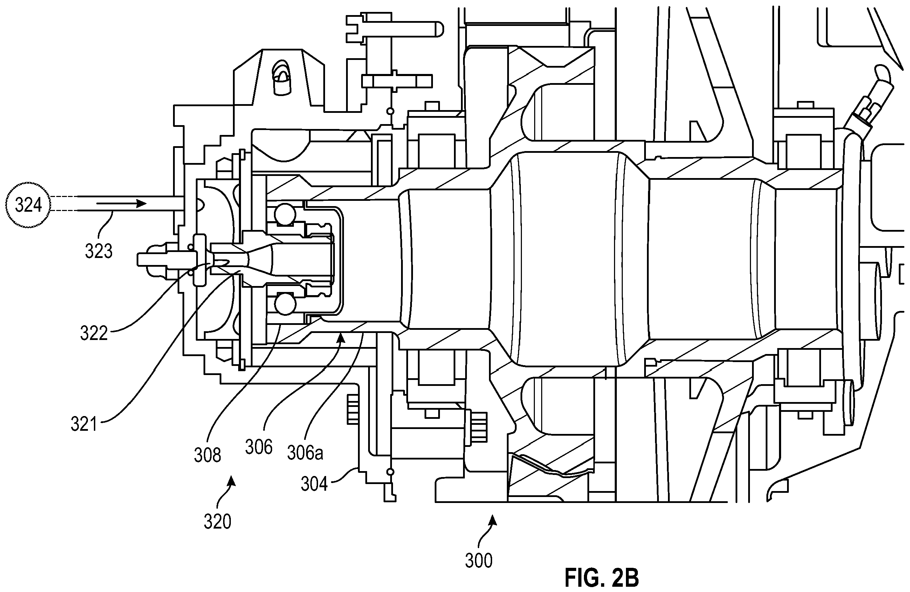

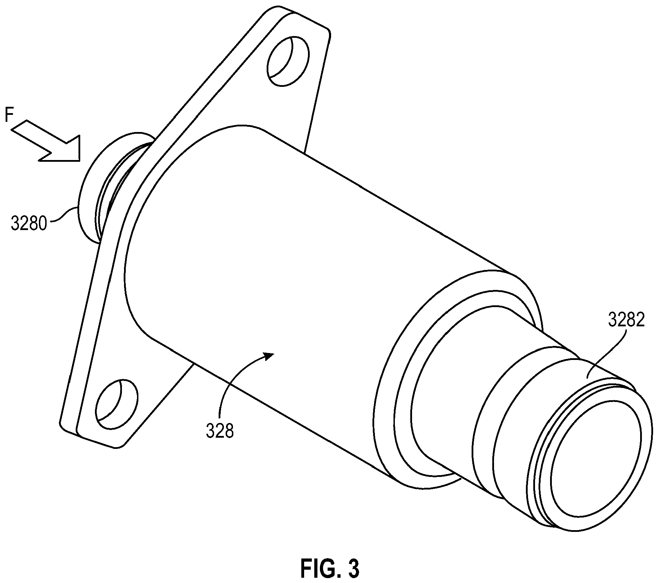

Le capot 3210 d'un piston hydraulique 321, décrit ci-après, et un bloc support pompe-filtre portant un capteur de pression 328, également décrit ci-dessous, sont visibles sur la boîte de transmission 300 en figure 1. Une section transversale de la boîte de transmission 300 est illustrée en détail en Fig. 2B. La boîte de transmission 300 présente ici une enveloppe 304 et un pignon 306, monté mobile en rotation dans l'enveloppe 304. Un arbre 306a du pignon 306 est relié en liaison pivot avec le piston hydraulique 321 du couplemètre 320 au moyen d'un palier 308. La poussée axiale qu'exerce le pignon 306 sur le piston 321 a pour effet de réguler l'ouverture d'un clapet 322, c'est-à-dire de moduler l'importance d'une fuite d'huile depuis un circuit d'alimentation 323 alimenté depuis une pompe 324 (figures 2A et 2B). Un équilibre est ainsi atteint entre la poussée axiale exercée par le pignon 306 et la poussée du fluide hydraulique sur le piston 321. La pression ainsi régulée dans le circuit d'alimentation 323 est mesurée par le capteur de pression 328 (figures 1, 2A, 3). Le capteur 328 est ici à piston hydraulique 3280 et à élément résistif 3281. La pression F exercée par le fluide sur le piston hydraulique 3280 est transformée en 3281 en un signal de sortie, ici une tension électrique proportionnelle à la pression du fluide. Un connecteur électrique 3282 (figure 3) permet de transmettre le signal de sortie à une unité de calcul 329, laquelle commande un indicateur visuel 330 dans la cabine de l'aéronef.

Un autre couplemètre hydraulique est connu du document FR3025602. Dans ce dispositif, une tige 30 est mobile en translation selon une direction longitudinale sous l'effet d'une poussée axiale 31 représentative du couple à mesurer. Un circuit hydraulique 40 dans lequel circule un fluide 38 est prévu. Ce couplemètre comprend également une capsule manométrique 46 comprenant une chambre de pression 36 alimentée en fluide par le circuit hydraulique 40. Une membrane 32, souple et étanche, est en contact avec le fluide de la chambre de pression 36, s'étend dans un plan sensiblement perpendiculaire à ladite tige 30 et est reliée solidairement à une extrémité de la tige 30 de façon à ce qu'un déplacement longitudinal de la tige 30 entraîne une déformation de la membrane 32. Ce dispositif comporte encore un orifice de fuite 44 du fluide 38 de la chambre 36 de pression, et un clapet 48 configuré pour réguler la pression du fluide 38 dans ladite chambre de pression 36 en fonction de la déformation de ladite membrane 32.

Dans ce type de couplemètre, la régulation de pression hydraulique est également assurée par une alimentation de la chambre hydraulique, continue et excédentaire, prélevée sur le circuit d'huile de lubrification du moteur. Un clapet limite le débit sortant de la chambre hydraulique, ce qui ajuste automatiquement la pression jusqu'à compenser exactement la poussée axiale du pignon intermédiaire.

Les formes que peut prendre ce dispositif de régulation sur les différents moteurs concernés sont assez diverses et sont perfectibles. Leurs caractéristiques fondamentales (en particulier la relation ouverture du clapet-débit - pression différentielle) ne sont pas connues expérimentalement, et leur sensibilité aux tolérances de fabrication doit être déterminée au cas par cas. Les couples en régime transitoire rapide du moteur ne sont pas précisément mesurés car ces systèmes reposent sur l'instauration d'un état d'équilibre dépendant de la performance du circuit d'huile moteur. En particulier la mesure du couple maximum atteint lors d'un régime transitoire est incertaine, ce qui peut entrainer des dépassements du couple admissible par le moteur sans que cela ne soit détecté par le système de régulation et de surveillance du moteur.

Ce type de système représente également une perte énergétique prélevée sur le circuit de lubrification.

Les systèmes actuels font office de butée axiale au pignon intermédiaire, mais uniquement dans un sens. Dans l'autre sens, une deuxième butée axiale doit être ajoutée.

La présente invention vise à résoudre les inconvénients des solutions connues et propose une solution simple, efficace et économique à ce problème. La présente invention vise notamment à simplifier les solutions existantes à et améliorer la fiabilité et l'efficacité des mesures de couple.

### Résumé de l'invention

L'invention concerne ainsi un dispositif hydraulique de mesure de couple pour boîte de transmission d'un groupe moteur d'aéronef comportant au moins un pignon présentant un arbre s'étendant selon un axe longitudinal, le dispositif hydraulique comportant :
- une enceinte comportant une paroi rigide et une paroi déformable délimitant un volume intérieur, la paroi déformable étant configurée pour être reliée en liaison pivot à l'arbre du pignon, et
- au moins un élément de mesure de pression apte à mesurer une pression régnant dans ledit volume intérieur,
le dispositif hydraulique admettant un état de service dans lequel le volume intérieur est rempli exclusivement d'un liquide incompressible, et dans lequel la paroi déformable est configurée pour être soumise à un effort en pression.

Dans ce dispositif hydraulique de mesure de couple, l'enceinte est hermétiquement close.

Le dispositif hydraulique de mesure de couple selon l'invention peut comprendre une ou plusieurs des caractéristiques suivantes, considérées indépendamment les unes des autres ou en combinaison les unes avec les autres :
- la paroi déformable est un soufflet métallique ;
- le soufflet métallique est de forme cylindrique et déformable selon une dimension axiale ;
- le dispositif hydraulique comporte en outre un moyen de calcul de couple configuré pour calculer un couple à partir de la pression mesurée dans le volume intérieur par l'élément de mesure de pression.

L'invention porte encore sur une boîte de transmission pour groupe moteur d'aéronef, comportant un dispositif hydraulique de mesure de couple précité, la boîte de transmission comportant au moins un pignon présentant un arbre s'étendant selon un axe longitudinal, la paroi déformable étant reliée en liaison pivot à l'arbre.

La boîte de transmission selon l'invention peut comprendre une ou plusieurs des caractéristiques suivantes, considérées indépendamment les unes des autres ou en combinaison les unes avec les autres :
- la paroi déformable est un soufflet métallique de forme cylindrique et déformable, et s'étend coaxialement à l'axe longitudinal de l'arbre du pignon ;
- la paroi rigide forme partie intégrante d'une enveloppe de la boîte de transmission ;
- la paroi rigide comporte un conduit de remplissage et/ou de purge, ledit conduit de remplissage et/ou de purge étant obturé dans un état de service du dispositif hydraulique.
- la paroi rigide comporte une interface de prise de mesure de pression, ledit élément de mesure de pression étant en communication avec le volume intérieur par l'intermédiaire de l'interface de prise de mesure de pression ;
- la boîte de transmission est une boîte de transmission principale pour hélicoptère.

### Brève description des figures

D'autres caractéristiques et avantages de l'invention apparaitront au cours de la lecture de la description détaillée qui va suivre pour la compréhension de laquelle on se reportera aux dessins annexés dans lesquels :
- la figure 1 est une vue en perspective d'une boîte de transmission d'un groupe moteur d'aéronef selon l'état de la technique, disposant d'un couplemètre pourvu d'un capteur de pression ;
- la figure 2A illustre de manière schématique la mise en oeuvre du couplemètre dans la boîte de transmission de la figure 1, la boîte de transmission étant ici vue en section ;
- la figure 2B est un agrandissement de la vue en section de la boîte de transmission de la figure 1 et 2A ;
- la figure 3 est une vue en perspective du capteur de pression de la figure 1 ; et
- la figure 4 est une vue en coupe transversale d'une boîte de transmission pourvue d'un couplemètre selon l'invention.

### Description détaillée de l'invention

Dans la description qui suit, l'invention est appliquée à une boîte de transmission 3, par exemple une boîte de transmission principale d'un groupe moteur (non illustré) d'hélicoptère. La boîte de transmission n'est toutefois pas limitée à ce type de groupe moteur et peut être appliquée à d'autres types de groupes moteurs, ainsi qu'à d'autres types d'aéronefs, notamment lorsqu'un couple est à mesurer.

La boîte de transmission 3 comporte une enveloppe rigide 4 et un jeu de pignons 5. Le jeu de pignons 5 comporte dans exemple au moins un premier pignon 6 et un deuxième pignon 7, en prise l'un avec l'autre au niveau de dents 6a, respectivement 7a. Le jeu de pignons 5 appartient à un réducteur de la boîte de transmission 3 qui n'est pas illustré en détail. Le pignon 6 est par exemple, non limitativement, un pignon intermédiaire de ce réducteur.

Le pignon 6 s'étend généralement autour d'un axe longitudinal A et est mobile en rotation autour de celui-ci. Les dents 6a du pignon 6 sont réparties de manière régulière autour de l'axe longitudinal A.

Dans l'exemple illustré, le pignon 6 comporte un arbre 6b autour duquel il est configuré pour tourner. L'arbre 6b est ici un arbre creux et présente une succession de portions cylindriques creuses 6b1, 6b2, 6b3, de diamètre respectif décroissant en direction d'un couplemètre hydraulique 20 décrit ci-après.

Un voile 6c s'étend ici depuis l'extrémité de la portion cylindrique 6b1 adjacente à la portion cylindrique 6b2. Le voile 6c porte une couronne cylindrique 6d pourvue de dents 6a. Une extrémité distale 6e s'étend à l'extrémité de la partie cylindrique 6b3.

L'enveloppe 4 comporte une pluralité de parois, dont ici seules deux parois 10 et 11 sont représentées. La paroi 11 délimite un volume intérieur 12 dans lequel l'extrémité 6e et les portions cylindriques 6b2 et 6b3 du pignon 6 sont ici logées. Le pignon 6 est ainsi monté mobile en rotation dans l'enveloppe 4 au moyen d'un palier 8. Dans cet exemple, le palier 8 est non limitativement un palier à rouleaux.

Comme évoqué ci-dessus, le boîtier de transmission 3 comporte par ailleurs un dispositif hydraulique de mesure de couple 20, également appelé couplemètre hydraulique. Le couplemètre 20 est prévu pour mesurer la poussée axiale de l'un des pignons du jeu de pignons 5, par exemple lors d'une phase de mise en marche du moteur ou en régime stabilisé. Ici, le couplemètre 20 est un élément généralement allongé et aligné sur l'axe longitudinal A précité, c'est-à-dire coaxial à l'axe sur lequel le pignon 6 est centré.

Le couplemètre hydraulique 20 présente une enceinte 20a comportant une paroi rigide 21 et une paroi déformable 22. Comme il apparaîtra ci-après, l'enceinte 20a est hermétiquement close.

Les parois 21 et 22 délimitent entre elles une chambre hydraulique 26. Dans un état de service du couplemètre hydraulique 20, la chambre 26 est remplie (exclusivement) de liquide incompressible, par exemple d'huile moteur.

La paroi déformable 22 est ici un soufflet métallique. La paroi déformable 22 est de forme générale sensiblement cylindrique. La paroi déformable 22 est prévue coaxiale à l'axe longitudinal A de l'arbre 6b dans un état de service du couplemètre 20. La paroi déformable 22 présente une faible raideur axiale autour d'une position de repos. La position de repos de la paroi déformable 22 est définie dans une situation dans laquelle aucune pression axiale directement liée au mouvement d'un élément rotatif, tel que le pignon 6, ne s'exerce sur la paroi déformable.

La paroi déformable 22 présente une première partie d'extrémité 23, une partie centrale 24 et une deuxième partie d'extrémité 25.

La première partie d'extrémité 23 comporte ici, non limitativement, une bride annulaire 230 destinée à assurer l'installation du couplemètre 20 dans la boîte de transmission 3.

La partie centrale 24 forme ici le corps principal du soufflet métallique à proprement parler. La partie centrale 24 a ici une forme générale sensiblement cylindrique. Elle prend la forme d'une succession de replis d'une feuille métallique sur elle-même. Le terme repli doit être compris comme désignant une couche, en regard avec les replis, ou couches, immédiatement adjacents. Le nombre de replis peut non limitativement être choisi entre 2 et 20, de préférence entre 4 et 12.

La deuxième partie d'extrémité 25 forme moyen de liaison avec l'arbre 6b du pignon 6 et comporte ici une platine 250, une douille 253, une bague de fixation 254 et un palier 255.

La platine 250 est de forme en disque. La platine 250 est pourvue d'un pion 251. La platine 250 est montée à l'extrémité de la partie centrale 24 opposée à la première partie d'extrémité 23. Le pion 251 s'étend en saillie au centre du disque formé par la platine 250, sur la face de celle-ci opposée à la partie centrale 24. Le pion 251 présente un filet 252 sur sa surface cylindrique périphérique.

La douille 253 est un élément cylindrique. La douille 253 a ici une section sensiblement en forme de H délimitant deux cavités opposées l'une à l'autre. La douille 253 présente un filet intérieur dans l'une de ses cavités. Ce filet intérieur lui permet de se visser sur le pion 251 de manière à se fixer à ce dernier.

La douille 253 est par ailleurs montée mobile en rotation dans l'extrémité 6e et à l'intérieur de la portion cylindrique 6b3 du pignon 6 par l'intermédiaire du palier 255, qui est ici un palier à billes, et de la bague de fixation 254.

Le couplemètre 20 est par ailleurs installé dans la boîte de transmission 3 de la manière suivante.

Dans l'exemple illustré non limitatif, la paroi rigide 21 fait partie intégrante de l'enveloppe 4 précitée. En d'autres termes, la paroi 21 joue ici le rôle de couvercle de l'enveloppe 4 obturant le volume intérieur 12.

La paroi 21 est fixée contre la paroi 11, de préférence par vissage mais non limitativement. Les parois 11 et 21 prennent en sandwich, c'est-à-dire pincent, la bride annulaire 230 entre elles. La bride annulaire 230 est ainsi montée de manière étanche entre les parois 11 et 21 de l'enveloppe 4.

Ainsi, en plus d'être monté à rotation en sa deuxième partie extrémité 25 par rapport à l'extrémité 6e du pignon 6, la paroi déformable 22 est fixée en sa première extrémité 23 par rapport à l'enveloppe 4.

Une gorge 271 logeant un joint torique 270 est ménagée dans le plan d'extrémité B de la paroi 11 sur laquelle la bride annulaire 230 vient en contact lorsque le couplemètre 20 est assemblé. L'étanchéité aux fluides est ainsi assurée entre la paroi 11 et la bride annulaire 230.

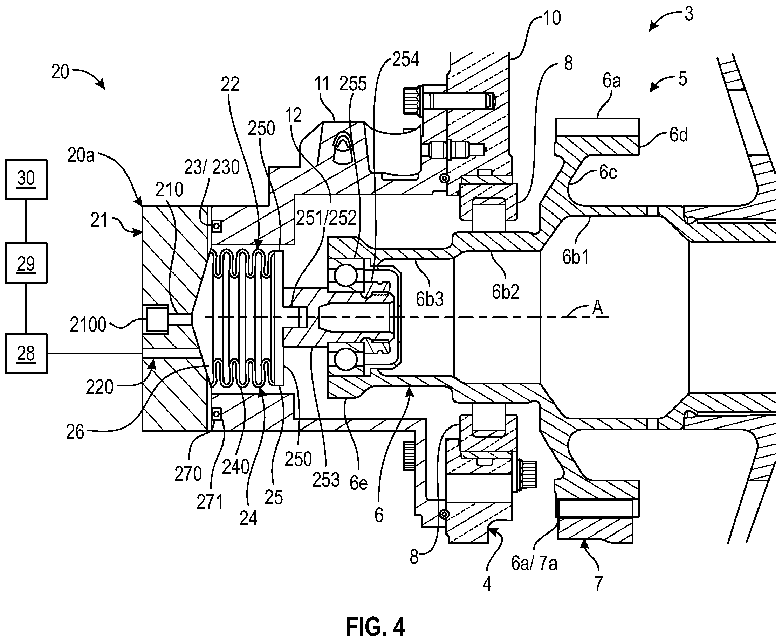

Dans la configuration décrite ci-dessus, on constate que le pignon 6 est monté en liaison pivot dans l'enveloppe 4 par l'intermédiaire du palier 8. Le pignon 6 est également en liaison pivot avec le soufflet 22. Plus précisément, la deuxième partie d'extrémité 25 du soufflet 22 est en liaison pivot avec l'arbre 6b par l'intermédiaire du palier 255. En d'autres termes, une rotation du pignon 6 n'entraînera pas en rotation le soufflet 22. Néanmoins, toute pression axiale selon l'axe A, qu'elle soit négative ou positive, c'est-à-dire dans un sens ou dans l'autre dans la direction de l'axe A tel qu'illustré en Fig. 4, sera répercutée sur le soufflet 22 selon l'axe A et tendra à faire varier la pression du liquide de la chambre hydraulique 26. Le couplemètre 20 forme ainsi butée axiale du pignon 6.

La paroi 21 est ici traversée par un premier conduit 210, lequel est obturé de manière étanche par un bouchon 2100 dans un état de service du couplemètre 20 et/ou de la boîte de transmission 3.

Le conduit 210 forme conduit de remplissage et de purge. Le bouchon 211 est configuré pour obturer le conduit 210 dans un état de service du couplemètre 20.

La paroi 21 est également traversée par un deuxième conduit 220. Le conduit 220 forme une interface de prise de mesure de pression. En d'autres termes, le conduit 220 communique de manière fluide avec un dispositif de mesure de pression non illustré.

Le couplemètre comporte au moins un élément de mesure de pression 28 de type capteur de pression. L'élément de mesure de pression 28 est en communication avec la chambre hydraulique 26 par l'intermédiaire du conduit 220. L'élément de mesure de pression 28 a pour rôle de mesurer la pression et ses changements dans la chambre hydraulique 26.

En variante non illustrée, le couplemètre 20 présente un deuxième élément de mesure de pression. Ceci est par exemple avantageux pour faire face aux défaillances de l'un ou l'autre du premier ou du deuxième élément de mesure de pression et/ou disposer d'une mesure de pression redondante aux fins d'améliorer la fiabilité de la mesure. L'interface de prise de mesure de pression peut alors être prévue pour communiquer avec les deux éléments de mesure de pression. En variante non illustrée, une interface de prise de mesure de pression est prévue à travers la paroi rigide 21 pour chaque élément de mesure de pression.

Le couplemètre comporte également un moyen de calcul de couple 29 configuré pour calculer un couple moteur à partir de la pression mesurée dans le volume intérieur par l'au moins un élément de mesure de pression 28. Le cas échéant, le couple mesuré peut être affiché sur un indicateur 30, par exemple en cabine de l'aéronef.

L'expression hermétiquement close signifie que l'enceinte 20a est dépourvue de circuit d'alimentation continue en liquide incompressible et de circuit de drainage de ce liquide. En d'autres termes, la chambre hydraulique 26 délimitée par les parois 21 et 22 est remplie de liquide incompressible lors d'une opération de préparation du couplemètre 20 (par exemple : une opération de purge et de remplissage initial de la chambre hydraulique 26, ou une opération de maintenance ultérieure du couplemètre 20) mais n'est pas traversée par un flux de liquide incompressible à l'état de service du couplemètre hydraulique 20.

Le couplemètre hydraulique 20 décrit ci-dessus peut être avantageusement mis en oeuvre dans une boîte de transmission d'aéronef tel qu'un hélicoptère ou un avion.

L'invention apporte les avantages suivants. La solution proposée élimine le système de régulation automatique de pression de l'art antérieur, et avec lui :
- la nécessité de disposer d'un circuit d'alimentation en huile moteur prélevée sur le circuit général de lubrification ;
- le clapet de régulation afférent.

L'apport principal de cette solution est donc de simplifier fortement les couplemètres hydrauliques connus avec différents avantages induits.

Le couplemètre hydraulique 20 offre ainsi une meilleure fiabilité. La mesure de couple devient instantanée et est désormais indépendante du régime moteur. Il n'est en effet plus nécessaire d'attendre l'atteinte d'un état d'équilibre dépendant en partie du circuit de lubrification du moteur. Les couples sont donc mesurés en régime transitoire avec la même précision qu'en régime stabilisé.

Ce dispositif assure une butée axiale bidirectionnelle au pignon 6. Il devient le cas échéant possible de mesurer des couples négatifs.

Le soufflet métallique 22 sera choisi suffisamment souple axialement pour éviter une augmentation significative de la pression interne à la chambre hydraulique 26 provoquée par la dilatation thermique du liquide la remplissant. Le soufflet métallique 22 sera également choisi suffisamment résistant radialement pour supporter la pression interne du liquide sous l'effet d'un couple important (pouvant atteindre un maximum de 10 bars) et ses cycles répétés (dimensionnement en fatigue).

L'élément de mesure de pression 28 peut avantageusement être choisi pour être à la fois un capteur de pression et de température (non illustré) pour permettre de prendre en compte l'augmentation de pression causée par une dilatation thermique du liquide. Il est alors possible d'éliminer par logiciel la composante thermique de la mesure de pression.

Avantageusement, afin de permettre une purge parfaite de la chambre hydraulique 26, l'ensemble enceinte-capteur de pression peut être équipé et préalablement rempli et purgé en atelier, et composé des éléments suivants :
- enceinte 20a purgée et remplie ;
- capteur(s) de pression 28.

Il est ainsi possible de remplacer cet ensemble 20a, 28, qui forme butée axiale du pignon 6 installé dans la boîte de transmission 3, sans avoir à démonter le réducteur. Ceci permet un gain de temps substantiel lors des opérations de maintenance.

Le conduit de remplissage et de purge 210 permet d'éliminer toute bulle d'air lors du remplissage de la chambre hydraulique 26.

## Revendications

1. Dispositif hydraulique de mesure de couple pour boîte de transmission d'un groupe moteur d'aéronef comportant au moins un pignon présentant un arbre s'étendant selon un axe longitudinal, le dispositif hydraulique comportant :
- une enceinte (20a) comportant une paroi rigide (21) et une paroi déformable (22) délimitant un volume intérieur (26), la paroi déformable étant configurée pour être reliée en liaison pivot à l'arbre du pignon, et
- au moins un élément de mesure de pression (28) apte à mesurer une pression régnant dans ledit volume intérieur (26),
le dispositif hydraulique (20) admettant un état de service dans lequel le volume intérieur (26) est rempli exclusivement d'un liquide incompressible, et dans lequel la paroi déformable (22) est configurée pour être soumise à un effort en pression,
**caractérisé en ce que** l'enceinte (20a) est hermétiquement close.

2. Dispositif hydraulique de mesure de couple selon la revendication précédente, dans lequel la paroi déformable (22) est un soufflet métallique (23, 24, 25).

3. Dispositif hydraulique de mesure de couple selon la revendication précédente, le soufflet métallique (22) est de forme cylindrique et déformable selon une dimension axiale.

4. Dispositif hydraulique de mesure de couple selon l'une des revendications précédentes, le dispositif hydraulique comportant en outre un moyen de calcul de couple (29) configuré pour calculer un couple à partir de la pression mesurée dans le volume intérieur (26) par l'élément de mesure de pression (28).

5. Boîte de transmission pour groupe moteur d'aéronef, comportant un dispositif hydraulique de mesure de couple selon l'une des revendications précédentes, la boîte de transmission comportant au moins un pignon (6) présentant un arbre (6b) s'étendant selon un axe longitudinal (A), la paroi déformable (22) étant reliée en liaison pivot à l'arbre (6b).

6. Boîte de transmission selon la revendication précédente dans sa dépendance à la revendication 3 ou 4, dans laquelle la paroi déformable est un soufflet métallique de forme cylindrique et déformable, et s'étend coaxialement à l'axe longitudinal (A) de l'arbre (6b) du pignon (6).

7. Boîte de transmission selon la revendication 5 ou 6, dans laquelle la paroi rigide (21) forme partie intégrante d'une enveloppe (4) de la boîte de transmission (3).

8. Boîte de transmission selon l'une des revendications 5 à 7, dans laquelle la paroi rigide (21) comporte un conduit de remplissage et de purge (210), ledit conduit de remplissage et de purge (210) étant obturé dans un état de service du dispositif hydraulique.

9. Boîte de transmission selon l'une des revendications 5 à 8, dans laquelle la paroi rigide (21) comporte une interface de prise de mesure de pression (211), ledit élément de mesure de pression (28) étant en communication avec le volume intérieur (26) par l'intermédiaire de l'interface de prise de mesure de pression (211).

10. Boîte de transmission selon l'une des revendications 5 à 9, de type boîte de transmission principale pour hélicoptère.

## Patentansprüche

1. Hydraulische Drehmomentmessvorrichtung für ein Getriebe einer Flugzeugmotoreinheit, das mindestens ein Ritzel umfasst, das eine Welle aufweist, die sich in einer Längsachse erstreckt, wobei die hydraulische Vorrichtung umfasst:
- ein Gehäuse (20a), das eine steife Wand (21) und eine verformbare Wand (22) umfasst, die ein Innenvolumen (26) begrenzen, wobei die verformbare Wand konfiguriert ist, um durch eine Schwenkverbindung mit der Welle des Ritzels verbunden zu werden, und
- mindestens ein Druckmesselement (28), das geeignet ist, einen im Innenvolumen (26) herrschenden Druck zu messen,
wobei die hydraulische Vorrichtung (20) einen Dienstzustand ermöglicht, bei dem das Innenvolumen (26) ausschließlich mit einer inkompressiblen Flüssigkeit gefüllt ist und wobei die verformbare Wand (22) konfiguriert ist, um einer Druckbelastung ausgesetzt zu sein, **dadurch gekennzeichnet, dass** das Gehäuse (20a) luftdicht verschlossen ist.

2. Hydraulische Drehmomentmessvorrichtung nach dem vorstehenden Anspruch, wobei die verformbare Wand (22) ein Metallbalg (23, 24, 25) ist.

3. Hydraulische Drehmomentmessvorrichtung nach dem vorstehenden Anspruch, wobei der Metallbalg (22) zylinderförmig ist und entlang einer axialen Dimension verformbar ist.

4. Hydraulische Drehmomentmessvorrichtung nach einem der vorstehenden Ansprüche, wobei die hydraulische Vorrichtung weiter ein Drehmomentberechnungsmittel (29) umfasst, das konfiguriert ist, um ausgehend von dem im Innenvolumen (26) von dem Druckmesselement (28) gemessenen Druck ein Drehmoment zu berechnen.

5. Getriebe für Flugzeugmotoreinheit, umfassend eine hydraulische Drehmomentmessvorrichtung nach einem der vorstehenden Ansprüche, wobei das Getriebe mindestens ein Ritzel (6) umfasst, das eine Welle (6b) aufweist, die sich in einer Längsachse (A) erstreckt, wobei die verformbare Wand (22) durch eine Schwenkverbindung mit der Welle (6b) verbunden ist.

6. Getriebe nach dem vorstehenden Anspruch in seiner Abhängigkeit von Anspruch 3 oder 4, wobei die verformbare Wand ein Metallbalg ist, der zylinderförmig und verformbar ist und sich koaxial zur Längsachse der Welle (6b) des Ritzels (6) erstreckt.

7. Getriebe nach Anspruch 5 oder 6, wobei die steife Wand (21) einen integralen Bestandteil einer Schale (4) des Getriebes (3) bildet.

8. Getriebe nach einem der Ansprüche 5 bis 7, wobei die steife Wand (21) eine Befüllungs- und Ablassleitung (210) umfasst, wobei die Befüllungs- und Ablassleitung (210) in einem Dienstzustand der hydraulischen Vorrichtung verschlossen ist.

9. Getriebe nach einem der Ansprüche 5 bis 8, wobei die steife Wand (21) eine Schnittstelle für den Druckmessvorgang (211) umfasst, wobei das Druckmesselement (28) über die Schnittstelle für den Druckmessvorgang (211) mit dem Innenvolumen (26) kommuniziert.

10. Getriebe nach einem der Ansprüche 5 bis 9, vom Hauptgetriebetyp für einen Hubschrauber.

## Claims

1. A hydraulic torque measurement device for a gearbox of an aircraft engine unit comprising at least one sprocket having a shaft extending along a longitudinal axis, the hydraulic device comprising:
- an enclosure (20a) comprising a rigid wall (21) and a deformable wall (22) delimiting an internal volume (26), the deformable wall being configured to be connected in pivot connection to the shaft of the sprocket, and
- at least one pressure measurement element (28) adapted to measure a pressure prevailing in said internal volume (26),
the hydraulic device (20) allowing a service state in which the internal volume (26) is filled exclusively with an incompressible liquid, and in which the deformable wall (22) is configured to be subjected to a pressure force,
**characterised in that** the enclosure (20a) is hermetically sealed.

2. The hydraulic torque measurement device according to the preceding claim, wherein the deformable wall (22) is a metallic bellow (23, 24, 25).

3. The hydraulic torque measurement device according to the preceding claim, the metallic bellow (22) is cylindrical in shape and deformable along an axial dimension.

4. The hydraulic torque measurement device according to any of the preceding claims, the hydraulic device further comprising a torque calculating means (29) configured to calculate a torque from the pressure measured in the internal volume (26) by the pressure measurement element (28).

5. A gearbox for aircraft engine unit, comprising a hydraulic torque measurement device according to one of the preceding claims, the gearbox comprising at least one sprocket (6) having a shaft (6b) extending along a longitudinal axis (A), the deformable wall (22) being connected in pivot connection to the shaft (6b).

6. The gearbox according to the preceding claim in dependence on claim 3 or 4, wherein the deformable wall is a cylindrical, deformable metallic bellow and extends coaxially to the longitudinal axis (A) of the shaft (6b) of the sprocket (6).

7. The gearbox according to claim 5 or 6, wherein the rigid wall (21) forms an integral portion of an envelope (4) of the gearbox (3).

8. The gearbox according to any one of claims 5 to 7, wherein the rigid wall (21) comprises a filling and purging conduit (210), said filling and purging conduit (210) being obturated in a service state of the hydraulic device.

9. The gearbox according to any of claims 5 to 8, wherein the rigid wall (21) comprises a pressure measurement interface (211), said pressure measurement element (28) being in communication with the internal volume (26) by means of the pressure measurement interface (211).

10. The gearbox according to any of claims 5 to 9, of the helicopter main gearbox type.
